# EUROPÄISCHE PATENTSCHRIFT

(11) **EP 3 628 483 B1**
(45) Veröffentlichungstag und Bekanntmachung des Hinweises auf die Patenterteilung: **11.10.2023**
(21) Anmeldenummer: 19193031.2
(22) Anmeldetag: 22.08.2019
(51) Int. Cl.: B32B 5/26, D04H 1/492, D04H 1/498, D04H 3/14, D04H 3/16

(54) **VERFAHREN ZUR HERSTELLUNG EINES MEHRSCHICHTIGEN ABDECKVLIESES FÜR EINE FAHRZEUG-INNENVERKLEIDUNG, DERARTIG HERGESTELLTES ABDECKVLIES SOWIE INNENVERKLEIDUNG MIT EINEM DERARTIG HERGESTELLTEN ABDECKVLIES**
METHOD FOR PRODUCING A MULTILAYER COVERING MATERIAL FOR A VEHICLE INTERIOR TRIM, COVERING MATERIAL PRODUCED FROM SAID METHOD AND INTERIOR TRIM COMPRISING SUCH A PRODUCED COVERING MATERIAL
PROCÉDÉ DE FABRICATION D'UN VOILE DE RECOUVREMENT MULTICOUCHE POUR UN REVÊTEMENT INTÉRIEUR DE VÉHICULE, VOILE DE RECOUVREMENT AINSI PRODUIT ET REVÊTEMENT INTÉRIEUR DE VÉHICULE DOTÉ D'UN TEL VOILE DE RECOUVREMENT

(30) Priorität: 26.09.2018 DE 102018123768
(43) Veröffentlichungstag der Anmeldung: 01.04.2020
(73) Patentinhaber: Sandler AG, 95126 Schwarzenbach/Saale (DE)
(72) Erfinder: Kreuzer, Stefan, 95173 Schönwald (DE); Hornfeck, Ulrich, 95119 Naila (DE)
(74) Vertreter: Grünecker Patent- und Rechtsanwälte PartG mbB

(56) Entgegenhaltungen:
- WO-A1-2017/011740
- WO-A2-2006/060403
- DE-U1-202008 015 663
- KR-A- 20150 000 240
- US-A1- 2014 358 101

## Beschreibung

Die Erfindung bezieht sich auf ein Verfahren zur Herstellung eines Abdeckvlieses entsprechend der Merkmale des Oberbegriffs des unabhängigen Anspruchs 1 für eine Innenverkleidung für ein Fahrzeug, mit einem Vliesgewebe, welches zumindest zwei Vliesschichten aufweist.

Dabei wird eine erste äußere Oberfläche des Vliesgewebes durch eine erste Oberfläche einer ersten Vliesschicht gebildet, und eine zweite äußere Oberfläche des Vliesgewebes durch eine zweite Oberfläche einer zweiten Vliesschicht gebildet. Dabei werden die erste Vliesschicht und die zweite Vliesschicht auf der gesamten Fläche untrennbar verbunden.

Ein Abdeckvlies ist unter anderem aus WO 2005/037607 A2 bekannt. Abdeckvliese dieser Art verhindern bei der Herstellung der Innenverkleidung ein Verkleben mit dem Werkzeug auf einer ersten Oberfläche der Innenverkleidung, wobei sie eine Barriere für den zur Fertigung der Innenverkleidung genutzten Klebstoff bilden. Ein Abdeckvlies ist auch aus KR 2015 000 0240 A bekannt.

Verfahren zur Herstellung von weiteren Vliesen sind unteranderem aus der WO 2017/011840 A1 und der US 2014/358101 bekannt.

In weiteren Ausführungen des Stands der Technik wird zur Herstellung der Innenverkleidung ein Harz als Klebstoff genutzt. Dazu wird ein Fasergewebe mit dem Harz getränkt und auf beiden Seiten einer Lage aus Hartschaum aufgeklebt, wodurch die Innenverkleidung zwei Lagen eines mit Harz getränkten Fasergewebes umfasst. Das Harz in der ersten Lage des Fasergewebes verklebt dabei das Abdeckvlies mit der Innenverkleidung, und das Harz in der zweiten Lage des Fasergewebes verklebt das eine zweite Oberfläche der Innenverkleidung bildende Dekor mit der Innenverkleidung. Dabei wird eine Barrierewirkung gegenüber dem Harz durch hydrophobe Eigenschaften des Abdeckvlieses erreicht. Diese hydrophoben Eigenschaften besitzen unter anderem Abdeckvliese, die aus einem Polyolefin-Vlies, beispielsweise einem Polypropylen-Vlies, gebildet sind. Da die erste Oberfläche der Innenverkleidung, die durch das Abdeckvlies gebildet ist, zumeist zur Befestigung anderer Bauteile, insbesondere Kabel, genutzt wird, wobei die Bauteile mittels Klebeband auf dem Abdeckvlies haften, wirken sich die hydrophoben Eigenschaften des Abdeckvlieses nachteilig auf die Haftwirkung des Haftklebstoffes des Klebebandes aus.

Gegenstand der vorliegenden Erfindung ist ein Verfahren zur Herstellung eines Abdeckvlieses für eine Innenverkleidung, welches sowohl eine gute Barrierewirkung gegen das zur Fertigung der Innenverkleidung genutzte Harz aufweist, als auch einen geeigneten Haftgrund für die Anbringung eines Haftklebstoffs bildet.

Die Aufgabe wird gelöst durch die Merkmale des unabhängigen Anspruchs 1. Demnach liegt bei einem Verfahren zur Herstellung eines Abdeckvlieses gemäß dem Oberbegriff des unabhängigen Anspruchs 1 dann eine erfindungsgemäße Lösung der Aufgabe vor, wenn die erste Vliesschicht aus einem rauen Polypropylen (PP) Wasserstrahlvlies gebildet wird, wobei bei der Herstellung der ersten Vliesschicht (3) ein Verhältnis (p/v) aus einem zur Verfestigung der ersten Vliesschicht (3) angewandten Vernadelungsdruck (p) und einer Produktionsgeschwindigkeit (v) einen Wert von 9,0 bar/(m/min) nicht überschreitet, wobei die erste äußere Oberfläche des Vliesgewebes (11) zur Anbringung eines Haftklebstoffs geeignet ist, wobei die erste äußere Oberfläche des Vliesgewebes zur Anbringung eines Haftklebstoffs geeignet ist, und die zweite Vliesschicht aus einem dichten PP-Spinnvlies gebildet wird, , und wobei die zweite äußere Oberfläche des Vliesgewebes ausgeprägte hydrophobe Eigenschaften aufweist und die zweite Vliesschicht (4) eine Luftdurchlässigkeit von höchstens 400 l/(m²·s) bei einer Druckdifferenz von 1 mbar zwischen der ersten äußeren Oberfläche der zweiten Vliesschicht (4) und der zweiten äußeren Oberfläche der zweiten Vliesschicht (4) aufweist.

Durch die hydrophoben Eigenschaften des PP-Spinnvlieses verhindert die zweite äußere Oberfläche des Vliesgewebes ein Durchschlagen des Klebstoffes der Innenverkleidung und damit ein Verkleben der Innenverkleidung mit dem Werkzeug. Gleichzeitig ermöglicht die raue Oberfläche des PP-Wasserstrahlvlieses eine Befestigung von Bauteilen, insbesondere von Kabeln, mittels auf der ersten äußeren Oberfläche haftenden Klebebändern. Durch die Verbindung beider Eigenschaften in einem Vliesgewebe kann außerdem die Anzahl der Komponenten der Innenverkleidung und damit der Herstellungsaufwand für die Innenverkleidung geringgehalten werden. Außerdem weisen beide PP-Vliese eine hinreichende Dehnbarkeit auf, die eine ausreichende Dehnung des Vliesgewebes für die bei der Anbringung an die Innenverkleidung auftretende Verformung ermöglicht.

Vorteilhafte Ausführungsformen der vorliegenden Erfindung sind Gegenstand der Unteransprüche.

Ferner stellt die Erfindung auch ein durch ein erfindungsgemäßes Verfahren hergestelltes Abdeckvlies. Gemäß einer besonders bevorzugten Ausführungsform der vorliegenden Erfindung weist die erste Vliesschicht eine Scheuerbeständigkeit bis zur Zerstörung der Faserstruktur der ersten Vliesschicht entsprechend der Martindale-Methode von höchstens 2.000 Intervallen bei einer Gewichtsbelastung von 12 kN auf. Somit wird die Struktur der ersten Vliesschicht schon bei einer Schleißzahl von höchstens 2.000 Martindale zerstört. Vorzugsweise zeichnet sich die erste Vliesschicht dadurch aus, dass die Struktur schon bei einer Schleißzahl von 100 Martindale leichte Abnutzungsspuren aufzeigt, bei 500 Martindale deutliche Abnutzungsspuren aufzeigt und bei einer Schleißzahl von 1.000 Martindale die Vliesstruktur zerstört ist. Dies wird dadurch erreicht, indem das Verhältnis (p/v) aus dem zur Verfestigung der ersten Vliesschicht angewandten Vernadelungsdruck (p) und der Produktionsgeschwindigkeit (v) einen Wert von 9,0 bar/(m/min) nicht überschreitet, und vorzugsweise im Bereich zwischen 6,0 bis 8,0 bar/(m/min) liegt.

Gemäß einer weiteren besonders bevorzugten Ausführungsform der vorliegenden Erfindung weist die zweite Vliesschicht eine Scheuerbeständigkeit bis zur Zerstörung der Faserstruktur der zweiten Vliesschicht entsprechend der Martindale-Methode von mindestens 20.000 Intervallen bei einer Gewichtsbelastung von 12 kN auf. Somit wird die Struktur der zweiten Vliesschicht frühestens bei einer Schleißzahl von mindestens 20.000 Martindale zerstört. Vorzugsweise zeichnet sich die zweite Vliesschicht dadurch aus, dass erst bei einer Schleißzahl von 1.000 Martindale leichte Abnutzungsspuren zu erkennen sind und bei 10.000 Martindale deutliche Abnutzungsspuren zu erkennen sind. Dies wird dadurch sichergestellt, dass bei der Verfestigung der zweiten Vliesschicht die Parameter Kalanderdruck (q), Kalandertemperatur (T) und Produktionsgeschwindigkeit (v) so gewählt werden, dass das Verhältnis (q.T/v) einen Wert von 60 K MPa s nicht unterschreitet, und vorzugsweise im Bereich zwischen 70 bis 100 K MPa s liegt.

Gemäß einer besonders bevorzugten Ausführungsform der vorliegenden Erfindung weist das Vliesgewebe ein Flächengewicht zwischen 60 g/m² und 90 g/m² auf, wodurch das Gewicht der Innenverkleidung geringgehalten wird.

Gemäß einer weiteren besonders bevorzugten Ausführungsform der vorliegenden Erfindung weist die zweite Vliesschicht ein Flächengewicht zwischen 25 g/m² und 40 g/m² auf.

Gemäß einer weiteren Ausführungsform der vorliegenden Erfindung umfasst die zweite Vliesschicht zumindest eine Meltblown-Zwischenlage, wobei die Meltblown-Zwischenlage die Barrierewirkung des PP-Vlieses verbessert.

Gemäß einer alternativen Ausführungsform der vorliegenden Erfindung weist die zweite Vliesschicht eine Dicke von 0,1 mm bis 0,8 mm, wodurch eine übermäßige Porosität vermieden wird, welche sich negativ auf die Barrierewirkung des Abdeckvlieses auswirkt.

Gemäß einer weiteren bevorzugten Ausführungsform der vorliegenden Erfindung weist die zweite Vliesschicht eine Wasserdichtigkeit von mindestens 20 cmH₂O auf. Dadurch wird eine geeignete Barrierewirkung gegenüber dem zur Fertigung der Innenverkleidung genutzten Klebstoff gewährleistet.

Erfindungsgemäß weist die zweite Vliesschicht eine Luftdurchlässigkeit von höchstens 400 l/(m²·s) bei einer Druckdifferenz von 1 mbar zwischen der ersten äußeren Oberfläche der zweiten Vliesschicht und der zweiten äußeren Oberfläche der zweiten Vliesschicht auf. Dadurch wird eine geeignete Barrierewirkung gegenüber dem zur Fertigung der Innenverkleidung genutzten Klebstoff gewährleistet.

Gemäß einer weiteren Ausführungsform der vorliegenden Erfindung ist die erste Vliesschicht thermisch mithilfe eines Kalanders auf die zweite Vliesschicht aufkaschiert. Dadurch können eine Perforation des Vliesgewebes vermieden, und eine besonders gute Barrierewirkung erreicht werden. Wichtig ist hierbei jedoch die Aufrechterhaltung einer faserigen ersten äußeren Oberfläche mit geringer Scheuerbeständigkeit, wodurch eine besonders gute Haftfähigkeit für einen Haftklebstoff erreicht werden kann.

Gemäß einer alternativen Ausführungsform der vorliegenden Erfindung sind die erste Vliesschicht und die zweite Vliesschicht mittels Wasserstrahlvernadelung verbunden. Dadurch ergibt sich eine besonders gute Haftung der Vliesschichten untereinander. Insbesondere vorteilhaft ist die Verbindung der ersten Vliesschicht und der zweiten Vliesschicht durch eine Kombination aus einer Wasserstrahlvernadelung mit einer geringeren Vernadelungsintensität und einer thermischen Kalandrierung mit geringem Anpressdruck zwischen den Kalanderwalzen, wodurch sowohl eine nachteilige Perforation des Vliesgewebes, als auch eine nachteilige Glättung der ersten äußeren Oberfläche des Vliesgewebes reduziert, und eine besonders gute Haftung der Vliesschichten untereinander erreicht werden kann.

Die vorliegende Erfindung stellt auch eine Innenverkleidung für ein Fahrzeug mit einem erfindungsgemäßen Abdeckvlies bereit. Dabei bildet eine erste äußere Oberfläche des Abdeckvlieses eine äußere Oberfläche der Innenverkleidung, wobei das Abdeckvlies mit einer zweiten äußeren Oberfläche in direktem Kontakt mit einem Faserverbundstoff der Innenverkleidung ist, wobei der Faserverbundstoff eine Harz-Matrix umfasst, welche das Abdeckvlies mit dem Faserverbundstoff verklebt.

Ein Ausführungsbeispiel der vorliegenden Erfindung wird im Folgenden anhand von Zeichnungen näher erläutert.
Figur 1 zeigt einen Schnitt durch ein Ausführungsbeispiel eines erfindungsgemäßen Abdeckvlieses mit einem Vliesgewebe 11 sowie einer Innenverkleidung 1 mit einem erfindungsgemäßen Abdeckvlies, sowie ferner ein Konzept zur Herstellung des Vliesgewebes 11 und der Innenverkleidung 1.
Figur 2 zeigt ein Konzept zur Herstellung eines erfindungsgemäßen Abdeckvlieses mit einem Vliesgewebe 11.

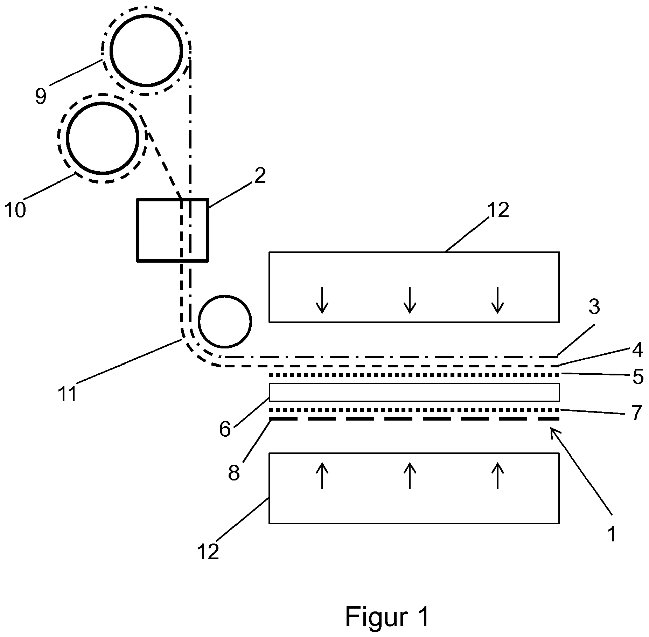

Wie in Figur 1 gezeigt, wird das Vliesgewebe 11 aus einer ersten Vliesschicht 3 und einer zweiten Vliesschicht 4 gebildet, wobei die erste Vliesschicht 3 ein raues PP-Wasserstrahlvlies ist und die zweite Vliesschicht 4 ein dichtes PP-Spinnvlies ist.

Das PP-Wasserstrahlvlies 3 aus einer ersten Quelle 9 und das PP-Spinnvlies 4 aus einer zweiten Quelle 10 werden in einer Vorrichtung zur Verbindung der beiden Vliesschichten 2 miteinander verbunden. Zur Herstellung einer Innenverkleidung 1 mit einem erfindungsgemäßen Abdeckvlies wird das Abdeckvlies mit dem Vliesgewebe 11 auf den übrigen Lagen der Innenverkleidung 1 abgelegt. Dabei bildet eine Oberfläche des PP-Wasserstrahlvlieses 3 eine erste äußere Oberfläche des Vliesgewebes 11, und eine Oberfläche des PP-Spinnvlieses 4 eine zweite äußere Oberfläche des Vliesgewebes 11, wobei die zweite äußere Oberfläche des Vliesgewebes 11 in direktem Kontakt mit einem Faserverbundstoff 5 der Innenverkleidung ist, wobei der Faserverbundstoff eine Harz-Matrix umfasst, welche das Abdeckvlies 11 mit dem Faserverbundstoff 5 verklebt. In diesem Ausführungsbeispiel ist der Faserverbundstoff 5 mit einem Glasfasergelege ausgeführt. Die hydrophoben Eigenschaften des PP-Spinnvlieses 4 verhindern hierbei das Durchschlagen des Harzes auf die zweite äußere Oberfläche des Vliesgewebes, wodurch verhindert wird, dass die Innenverkleidung 1 an einem Werkzeug 12 während des Pressvorgangs bei der Herstellung der Innenverkleidung 1 festklebt. Um eine geeignete Barrierewirkung des PP-Spinnvlieses 4 zu gewährleisten weist das PP-Spinnvlies 4 eine Wasserdichtigkeit von 20 cmH₂O und eine Luftdurchlässigkeit von 400 l/(m·s²) bei einer Druckdifferenz von 1 mbar auf.

Das PP-Wasserstrahlvlies 3 bildet somit eine erste Oberfläche der Innenverkleidung 1, auf der Bauteile mittels eines Haftklebers, insbesondere Kabel mittels eines Klebebandes, befestigt werden können.

Die Innenverkleidung 1 umfasst ferner eine Lage eines Polyurethan-Hartschaums 6, mit einer Dicke von etwa 10 mm, welche sich zwischen einem ersten Faserverbundstoff 5 und einem zweiten Faserverbundstoff 7 befindet, welche beide ein Glasfasergelege und eine Harz-Matrix umfassen. Dabei befindet sich der erste Faserverbundstoff 5 in direktem Kontakt mit dem Vliesgewebe 11, wobei das Vliesgewebe 11 mittels der Harz-Matrix des ersten Faserverbundstoffs 5 mit diesem verklebt ist, und der zweite Faserverbundstoff 7 in direktem Kontakt mit einem Dekor 8, wobei das Dekor 8 mittels der Harz-Matrix des zweiten Faserverbundstoff 7 mit diesem verklebt ist, wobei das Dekor 8 eine zweite Oberfläche der Innenverkleidung 1 bildet, welche zum Innenraum des Fahrzeugs hin sichtbar ist.

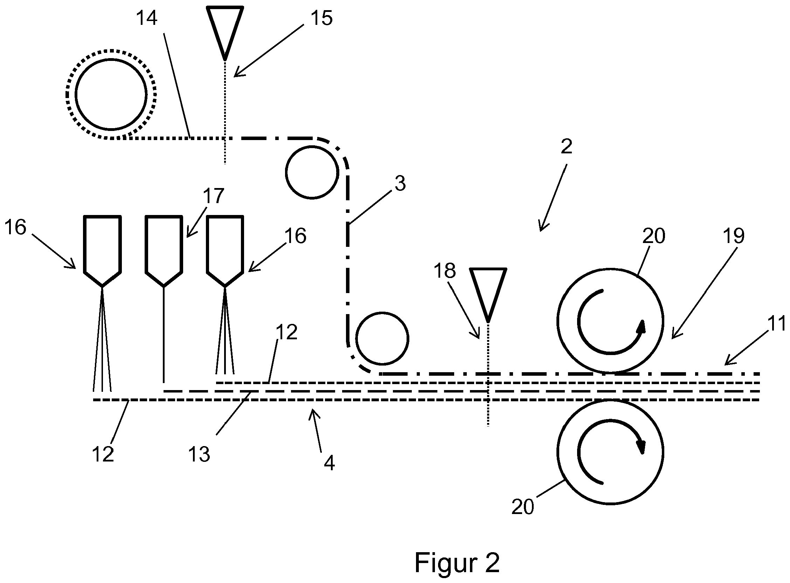

Wie in Figur 2 gezeigt, wird das PP-Vlies 3 durch einen wasserstrahlverfestigten PP-Flor gebildet, welcher aus einem unverfestigten Vlies 14 durch Wasserstrahlvernadelung 15 gebildet wird, da durch die faserige Oberfläche eine besonders gute Haftwirkung durch einen Haftkleber ermöglicht wird.

Das PP-Spinnvlies 4 umfasst zwei Spinnvlieslagen 12 und eine Meltblown-Zwischenlage 13, welche zwischen den beiden Spinnvlieslagen 12 liegt, wodurch sich ein SMS-Aufbau des PP-Spinnvlieses 4 ergibt. Alternativ können auch zwei Meltblown-Zwischenlagen 13 verwendet werden, wodurch sich ein SMMS-Aufbau des PP-Spinnvlieses 4 ergibt. Eine von einem Spinnvliesbalken 16 gebildete Spinnvlieslage 12 wird dabei von einem von einem Meltblownbalken 17 gebildeten Meltblown-Zwischenlage 13 überdeckt, und anschließend mit einer weiteren Spinnvlieslage 12 überdeckt.

Dabei beträgt das Flächengewicht des PP-Spinnvlieses 4 zwischen 25 g/m² und 40 g/m² und die Dicke des PP-Spinnvlieses 4 zwischen 0,1 mm und 0,8 mm, wobei das Flächengewicht des gesamten Vliesgewebes zwischen 60 g/m² und 90 g/m² beträgt.

Zum Verbinden des PP-Wasserstrahlvlieses 3 mit dem PP-Spinnvlies und zum Verfestigen des resultierenden Vliesgewebes 11 wird eine Vorrichtung zur Wasserstrahlvernadelung 18 und eine anschließende Vorrichtung zur thermischen Kalandrierung 19 verwendet. Bei der Vorrichtung zur Wasserstrahlvernadelung 18 wird das PP-Wasserstrahlvlies 3 auf dem PP-Spinnvlies 4 abgelegt und durch Wasserstrahlen auf das PP-Spinnvlies 4 aufgenadelt. Dadurch ergibt sich eine gute Haftung der beiden Vliesschichten untereinander. Bei der Vorrichtung zur thermischen Kalandrierung 19 wird das PP-Wasserstrahlvlies 3 thermisch mithilfe zweier Kalanderwalzen 20 auf das PP-Spinnvlies 4 aufkaschiert. Durch die Kombination aus Wasserstrahlvernadelung 18 und nachträglichem Kalandrieren 19 kann sowohl die Vernadelungsintensität der Wasserstrahlvernadelung 18, als auch der Anpressdruck zwischen den Kalanderwalzen 20 bei der thermischen Kalandirerung 19 verringert werden, wodurch einerseits die Perforation des Vliesgewebes 11, und andererseits eine nachteilige Glättung der ersten äußeren Oberfläche des Vliesgewebes 11 reduziert werden kann, wobei die Verbindung des PP-Wasserstrahlvlieses 3 mit dem PP-Spinnvlies 4 verbessert werden kann.

## Patentansprüche

1. Verfahren zur Herstellung eines Abdeckvlieses für eine Innenverkleidung (1) für ein Fahrzeug, wobei das Abdeckvlies ein Vliesgewebe (11) mit zumindest zwei Vliesschichten (3,4) aufweist, wobei die zumindest zwei Vliesschichten (3,4) eine erste Vliesschicht (3) und eine zweite Vliesschicht (4) umfassen, wobei eine erste äußere Oberfläche des Vliesgewebes (11) durch eine Oberfläche der ersten Vliesschicht (3) gebildet ist und eine zweite äußere Oberfläche des Vliesgewebes durch eine Oberfläche der zweiten Vliesschicht (4) gebildet ist, und wobei die erste Vliesschicht (3) und die zweite Vliesschicht (4) auf der gesamten Fläche untrennbar verbunden werden, **dadurch gekennzeichnet, dass** die erste Vliesschicht (3) aus einem rauen Polypropylen-Wasserstrahlvlies gebildet wird, wobei bei der Herstellung der ersten Vliesschicht (3) ein Verhältnis (p/v) aus einem zur Verfestigung der ersten Vliesschicht (3) angewandten Vernadelungsdruck (p) und einer Produktionsgeschwindigkeit (v) einen Wert von 9,0 bar/(m/min) nicht überschreitet, wobei die erste äußere Oberfläche des Vliesgewebes (11) zur Anbringung eines Haftklebstoffs geeignet ist, und die zweite Vliesschicht (4) aus einem dichten Polypropylen-Spinnvlies gebildet wird, wobei die zweite äußere Oberfläche des Vliesgewebes (11) hydrophobe Eigenschaften aufweist und die zweite Vliesschicht (4) eine Luftdurchlässigkeit von höchstens 400 l/(m²·s) bei einer Druckdifferenz von 1 mbar zwischen der ersten äußeren Oberfläche der zweiten Vliesschicht (4) und der zweiten äußeren Oberfläche der zweiten Vliesschicht (4) aufweist.

2. Verfahren nach Anspruch 1, **dadurch gekennzeichnet, dass** das Verhältnis (p/v) im Bereich zwischen 6,0 bis 8,0 bar/(m/min) liegt.

3. Verfahren nach Anspruch 1 oder 2, **dadurch gekennzeichnet, dass** die zweite Vliesschicht (4) mittels eines Kalanders verfestigt wird, wobei bei der Verfestigung der zweiten Vliesschicht (4) die Parameter Kalanderdruck (q), Kalandertemperatur (T) und Produktionsgeschwindigkeit (v) so gewählt werden, dass ein Verhältnis (q·T/v) einen Wert von 60 K·MPa·s nicht unterschreitet.

4. Verfahren nach Anspruch 3, **dadurch gekennzeichnet, dass** das Verhältnis (q·T/v) im Bereich zwischen 70 bis 100 K MPa s liegt.

5. Abdeckvlies für eine Innenverkleidung (1) für ein Fahrzeug hergestellt nach einem Verfahren der Ansprüche 1 bis 4.

6. Abdeckvlies nach Anspruch **5**, **dadurch gekennzeichnet, dass** die erste Vliesschicht (3) (11) eine Scheuerbeständigkeit bis zur Zerstörung der Faserstruktur der ersten Vliesschicht (3) entsprechend der Martindale-Methode von höchstens 2.000 Intervallen bei einer Gewichtsbelastung von 12 kN aufweist.

7. Abdeckvlies nach Anspruch **5** oder **6**, **dadurch gekennzeichnet, dass** die zweite Vliesschicht (4) eine Scheuerbeständigkeit bis zur Zerstörung der Faserstruktur der zweiten Vliesschicht (4) entsprechend der Martindale-Methode von mindestens 20.000 Interwallen bei einer Gewichtsbelastung von 12 kN aufweist.

8. Abdeckvlies nach einem der Ansprüche **5** bis **7**, **dadurch gekennzeichnet, dass** das Vliesgewebe (11) ein Flächengewicht zwischen 60 g/m² und 90 g/m² aufweist.

9. Abdeckvlies nach Anspruch **5** oder **8**, **dadurch gekennzeichnet, dass** die zweite Vliesschicht (4) ein Flächengewicht zwischen 25 g/m² und 40 g/m² aufweist.

10. Abdeckvlies nach einem der Ansprüche **5** bis **9**, **dadurch gekennzeichnet, dass** die zweite Vliesschicht (4) zumindest eine Meltblown-Zwischenlage (13) umfasst.

11. Abdeckvlies nach einem der Ansprüche **5** bis **10**, **dadurch gekennzeichnet, dass** die zweite Vliessicht (4) eine Dicke von 0,1 mm bis 0,8 mm aufweist.

12. Abdeckvlies nach einem der Ansprüche **5** bis **11**, **dadurch gekennzeichnet, dass** die zweite Vliesschicht (4) eine Wasserdichtigkeit von mindestens 20 cmH₂O aufweist.

13. Abdeckvlies nach einem der Ansprüche **5** bis **12**, **dadurch gekennzeichnet, dass** die erste Vliesschicht (3) thermisch mithilfe eines Kalanders (19) auf die zweite Vliesschicht (4) aufkaschiert ist.

14. Abdeckvlies nach einem der Ansprüche **5** bis **13**, **dadurch gekennzeichnet, dass** die erste Vliesschicht (3) und die zweite Vliesschicht (4) mittels Wasserstrahlvernadelung (18) verbunden sind.

15. Innenverkleidung (1) für ein Fahrzeug, mit einem Abdeckvlies nach einem der Ansprüche **5** bis **14**, wobei eine erste äußere Oberfläche des Abdeckvlieses eine äußere Oberfläche der Innenverkleidung (1) bildet, und wobei das Abdeckvlies mit einer zweiten äußeren Oberfläche in direktem Kontakt mit einem Faserverbundstoff (5) der Innenverkleidung (1) ist, wobei der Faserverbundstoff (5) eine Harz-Matrix umfasst, welche das Abdeckvlies mit dem Faserverbundstoff (5) verklebt.

## Claims

1. Method of manufacturing a cover nonwoven for an interior lining (1) for a vehicle, said cover nonwoven comprising a nonwoven fabric (11) having at least two nonwoven layers (3, 4), said at least two nonwoven layers (3,4) comprising a first nonwoven layer (3) and a second nonwoven layer (4), wherein a first outer surface of said nonwoven fabric (11) is formed by a surface of said first nonwoven layer (3) and a second outer surface of said nonwoven fabric is formed by a surface of said second nonwoven layer (4), and wherein the first nonwoven layer (3) and the second nonwoven layer (4) are inseparably bonded over the entire surface, **characterized in that** the first nonwoven layer (3) is formed from a rough polypropylene spunlaced nonwoven, wherein a ratio (p/v) of an entangling pressure (p) applied to solidify the first nonwoven layer (3) and a production speed (v) does not exceed a value of 9.0 bar/(m/min), wherein the first outer surface of the nonwoven fabric (11) is suitable for applying a pressure-sensitive adhesive, and the second nonwoven layer (4) is formed from a dense polypropylene spun-bonded nonwoven, wherein the second outer surface of the nonwoven fabric (11) has hydrophobic properties and the second nonwoven layer (4) has an air permeability of at most 400 l/(m²·s) at a pressure difference of 1 mbar between the first outer surface of the second nonwoven layer (4) and the second outer surface of the second nonwoven layer (4).

2. Method according to claim 1, **characterized in that** the ratio (p/v) is in the range between 6.0 and 8.0 bar/(m/min).

3. Method according to claim 1 or 2, **characterized in that** the second nonwoven layer (4) is solidified by means of a calender, the parameters calender pressure (q), calender temperature (T) and production speed (v) being selected during the solidification of the second nonwoven layer (4) such that a ratio (q·T/v) does not fall below a value of 60 K.MPa.s.

4. Method according to claim 3, **characterized in that** the ratio (q·T/v) is in the range between 70 and 100 K MPa s.

5. Cover nonwoven for an interior lining (1) for a vehicle manufactured according to a method according to one of the claims 1 to 4.

6. Cover nonwoven according to claim 5, **characterized in that** the first nonwoven layer (3) (11) has an abrasion resistance up to the destruction of the fibrous structure of the first nonwoven layer (3) according to the Martindale method of at most 2,000 intervals at a weight load of 12 kN.

7. Cover nonwoven according to claim 5 or 6, **characterized in that** the second nonwoven layer (4) has an abrasion resistance up to the destruction of the fibrous structure of the second nonwoven layer (4) according to the Martindale method of at least 20,000 intervals at a weight load of 12 kN.

8. Cover nonwoven according to one of claims 5 to 7, **characterized in that** the nonwoven fabric (11) has a weight per unit area between 60 g/m² and 90 g/m².

9. Cover nonwoven according to one of claims 5 or 8, **characterized in that** the second nonwoven layer (4) has a weight per unit area between 25 g/m² and 40 g/m².

10. Cover nonwoven according to one of claims 5 to 9, **characterized in that** the second nonwoven layer (4) comprises at least one melt-blown intermediate layer (13).

11. Cover nonwoven according to one of claims 5 to 10, **characterized in that** the second nonwoven layer (4) has a thickness of 0.1 mm to 0.8 mm.

12. Cover nonwoven according to one of claims 5 to 11, **characterized in that** the second nonwoven layer (4) has a water resistance of at least 20 cmHzO.

13. Cover nonwoven according to one of claims 5 to 12, **characterized in that** the first nonwoven layer (3) is thermally laminated onto the second nonwoven layer (4) with the aid of a calender (19).

14. Cover nonwoven according to one of claims 5 to 13, **characterized in that** the first nonwoven layer (3) and the second nonwoven layer (4) are joined by means of hydroentanglement (18).

15. Interior lining (1) for a vehicle, comprising a cover nonwoven according to one of claims 5 to 14, wherein a first outer surface of the cover nonwoven forms an outer surface of the interior lining (1), and wherein the cover nonwoven is in direct contact with a fibrous composite (5) of the interior lining (1) with a second outer surface, wherein the fibrous composite (5) comprises a resin matrix bonding the cover nonwoven to the fibrous composite (5).

## Revendications

1. Procédé de fabrication d'un non-tissé de revêtement pour l'habillage intérieur (1) d'un véhicule, dans lequel le non-tissé de revêtement comporte un textile non tissé (11) avec au moins deux couches de non-tissé (3, 4), dans lequel lesdites au moins deux couches de non-tissé (3, 4) comportent une première couche de non-tissé (3) et une deuxième couche de non-tissé (4), dans lequel une première surface extérieure du textile non tissé (11) est constituée par une surface de la première couche de non-tissé (3) et une deuxième surface extérieure du textile non tissé est constituée par une surface de la deuxième couche de non-tissé (4), et dans lequel la première couche de non-tissé (3) et la deuxième couche de non-tissé (4) sont liées de manière inséparable sur toute la surface, **caractérisé en ce que** la première couche de non-tissé (3) est constituée à partir d'un non-tissé hydrolié brut en polypropylène, dans lequel, lors de la fabrication de la première couche de non-tissé (3), un rapport (p/v) d'une pression d'aiguilletage (p) utilisée pour stabiliser la première couche de non-tissé (3) par une vitesse de production (v) ne dépasse pas une valeur de 9,0 bar/(m/min), dans lequel la première surface extérieure du textile non tissé (11) est adaptée pour l'application d'un adhésif, et la deuxième couche de non-tissé (4) est formée à partir d'un non-tissé filé-lié dense de polypropylène, dans lequel la deuxième surface extérieure du textile non tissé (11) présente des propriétés hydrophobes et la deuxième couche de non-tissé (4) présente une perméabilité à l'air d'au plus 400 l/(m²·s) à une différence de pression de 1 mbar entre la première surface extérieure de la deuxième couche de non-tissé (4) et la deuxième surface extérieure de la deuxième couche de non-tissé (4).

2. Procédé selon la revendication 1, **caractérisé en ce que** le rapport (p/v) est compris dans une plage de 6,0 à 8,0 bar/(m/min).

3. Procédé selon la revendication 1 ou 2, **caractérisé en ce que** la deuxième couche de non-tissé (4) est consolidée au moyen d'une calandre, dans lequel, lors de la consolidation de la deuxième couche de non-tissé (4), les paramètres de pression de calandrage (q), de température de calandrage (T) et de vitesse de production (v) sont choisis de telle sorte que le rapport (q·T/v) ne tombe pas en dessous d'une valeur de 60·K·MPa·s.

4. Procédé selon la revendication 3, **caractérisé en ce que** le rapport (q·T/v) est compris dans une plage de 70 à 100 K·MPa·s.

5. Non-tissé de revêtement pour habillage intérieur (1) de véhicule, fabriqué selon un procédé des revendications 1 à 4.

6. Non-tissé de revêtement selon la revendication 5, **caractérisé en ce que** la première couche de non-tissé (3) (11) présente une résistance à l'abrasion jusqu'à la destruction de la structure fibreuse de la première couche de non-tissé (3) selon la méthode Martindale d'au plus 2.000 intervalles sous une charge de 12 kN.

7. Non-tissé de revêtement selon la revendication 5 ou 6, **caractérisé en ce que** la deuxième couche de non-tissé (4) présente une résistance à l'abrasion jusqu'à la destruction de la structure fibreuse de la deuxième couche de non-tissé (4) selon la méthode Martindale d'au moins 20.000 intervalles sous une charge de 12 kN.

8. Non-tissé de revêtement selon l'une des revendications 5 à 7, **caractérisé en ce que** le textile non tissé (11) présente un grammage compris entre 60 g/m² et 90 g/m².

9. Non-tissé de revêtement selon la revendication 5 ou 8, **caractérisé en ce que** la deuxième couche de non-tissé (4) présente un grammage compris entre 25 g/m² et 40 g/m².

10. Non-tissé de revêtement selon l'une des revendications 5 à 9, **caractérisé en ce que** la deuxième couche de non-tissé (4) comprend au moins une couche intermédiaire (13) fondue-soufflée.

11. Non-tissé de revêtement selon l'une des revendications 5 à 10, **caractérisé en ce que** la deuxième couche de non-tissé (4) présente une épaisseur de 0,1 mm à 0,8 mm.

12. Non-tissé de revêtement selon l'une des revendications 5 à 11, **caractérisé en ce que** la deuxième couche de non-tissé (4) présente une étanchéité à l'eau d'au moins 20 cm de colonne d'eau.

13. Non-tissé de revêtement selon l'une des revendications 5 à 12, **caractérisé en ce que** la première couche de non-tissé (3) est laminée thermiquement sur la deuxième couche de non-tissé (4) à l'aide d'une calandre (19).

14. Non-tissé de revêtement selon l'une des revendications 5 à 13, **caractérisé en ce que** la première couche de non-tissé (3) et la deuxième couche de non-tissé (4) sont liées par aiguilletage par jet d'eau (18).

15. Habillage intérieur (1) pour véhicule à l'aide d'un non-tissé de revêtement selon l'une des revendications 5 à 14, dans lequel une première surface extérieure du non-tissé de revêtement forme une surface extérieure de l'habillage intérieur (1), et dans lequel le non-tissé de revêtement présente une deuxième surface extérieure en contact direct avec un matériau stratifié fibreux (5) de l'habillage intérieur (1), dans lequel le matériau stratifié fibreux (5) comprend une matrice de résine qui colle le non-tissé de revêtement au matériau stratifié fibreux (5).
